(19) Europäisches Patentamt
European Patent Office
Office européen des brevets

(11) **EP 2 541 282 A1**

(12) **EUROPEAN PATENT APPLICATION**

(43) Date of publication:
**02.01.2013 Bulletin 2013/01**

(51) Int Cl.:
***G01V 1/38*** (2006.01)

(21) Application number: **11305834.1**

(22) Date of filing: **29.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sercel**
**44470 Carquefou (FR)**

(72) Inventors:
• **Baliguet, Pierre**
  **44300 NANTES (FR)**
• **Ayela, Gérard**
  **29810 PLOUMOGUER (FR)**

• **L'Her, Christophe**
  **29470 LOPERHET (FR)**

(74) Representative: **Guéné, Patrick**
  **Cabinet Vidon**
  **Technopole Atalante**
  **16B, rue de Jouanet**
  **BP 90333**
  **35703 Rennes Cedex 7 (FR)**

Remarks:
Amended claims in accordance with Rule 137(2) EPC.

(54) **Method and device of obtaining a node-to-surface distance in a network of acoustic nodes, corresponding computer program product and storage means**

(57)    It is proposed a method of obtaining a node-to-surface distance (D1) between a reference surface (33) and a first node (30) belonging to a network comprising a plurality of nodes arranged along towed acoustic linear antennas and in which a plurality of acoustic sequences are sent between the nodes, each sequence being used to estimate an inter-node distance as a function of a propagation duration of the sequence between nodes. After emission by the first node (30) of a given signal:

- the first node measures a first propagation duration of a first echo, resulting from a first reflection by the reference surface of the given signal, and a first value of the node-to-surface distance is obtained as a function of that first propagation duration; and/or
- a second node (31,32) measures a second propagation duration of a second echo, resulting from a second reflection by the reference surface of the given signal, and a second value of the node-to-surface distance is obtained as a function of that second propagation duration.

Figure 3

EP 2 541 282 A1

**Description**

## 1. FIELD OF THE INVENTION

The invention relates to the field of geophysical data acquisition. More specifically, it relates to equipment for analyzing geological layers underneath the sea bed. The invention relates in particular to the oil prospecting industry using seismic method, but can apply to any field using a system for acquiring geophysics data in a marine environment.

More specifically, the invention pertains to a technique for obtaining a node-to-surface distance between a reference surface (such as a sea surface or an ocean bottom for example) and at least one node in a network of acoustic nodes arranged along towed acoustic linear antennas.

## 2. TECHNOLOGICAL BACKGROUND

It is sought more particularly here below in this document to describe problems existing in the field of seismic data acquisition for oil prospecting industry. The present invention of course is not limited to this particular field of application but is of interest for any technique that has to cope with closely related or similar issues and problems.

The operations of acquiring seismic data in the field conventionally use networks of seismic sensors, like accelerometers, geophones or hydrophones. In a context of seismic data acquisition in a marine environment, these sensors are distributed along cables in order to form linear acoustic antennae normally referred to as "streamers" or "seismic streamers". The network of seismic streamers is towed by a seismic vessel.

The seismic method is based on analysis of reflected seismic waves. Thus, to collect geophysical data in a marine environment, one or more submerged seismic sources are activated in order to propagate seismic wave trains. The pressure wave generated by the seismic source passes through the column of water and insonifies the different layers of the sea bed. Part of the seismic waves (i.e. acoustic signals) reflected are then detected by the sensors (e.g. hydrophones) distributed over the length of the seismic streamers. These acoustic signals are processed and retransmitted by telemetry from the seismic streamers to the operator station situated on the seismic vessel, where they are stored.

A well-known problem in this context is the positioning of the seismic streamers. Indeed, it is important to precisely locate the streamers in particular for:

-    monitoring the position of the sensors (hydrophones) in order to obtain a satisfactory precision of the image of the sea bed in the exploration zone; and
-    detecting the movements of the streamers with respect to one another (the streamers are often subjected to various external natural constrains of variable magnitude, such as the wind, waves, currents); and
-    monitoring the navigation of streamers.

Control of the positions of streamers lies in the implementation of navigation control devices (commonly referred as "birds") installed at regular intervals (every 300 meters for example) along the seismic streamers.

Birds of the prior art are used to control only the depth of the streamers in immersion. Today, the birds are used to control the depth as well as the lateral position of the streamers.

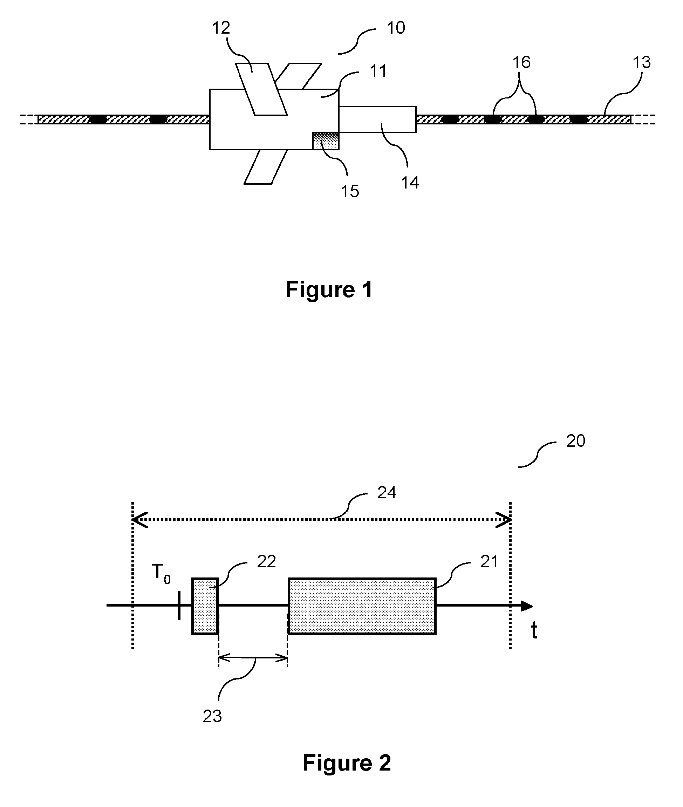

The **figure 1** shows a configuration of a part of a streamer 13 which comprises a series of sensors (hydrophones) 16, an electro-acoustic transducers 14 (described in more details thereafter) and a bird 10 distributed along its length.

A complete streamer 13 comprises (along its length) a multitude of parts described on figure 1, and thus comprises a huge number of sensors (hydrophones) 16 and a series of electro-acoustic transducers 14.

Each bird 10 may be associated with an electro-acoustic transducer 14 and comprises a body 11 equipped with at least one motorized pivoting wings 12 making it possible to steer laterally the streamer 13 and control the immersion depth of the streamer 13.

The control of the birds is performed locally or by a master controller situated onboard the vessel.

An acoustic node is commonly known as being a transducer 14 and it's associated electronic. A bird 10 may be associated with an acoustic node to allow this acoustic node to ensure a local control function of the associated streamer 13.

For the lateral control, the electro-acoustic transducers 14 allow to estimate the distances between acoustic nodes (named here below "inter-node distances") placed along two different streamers 13, adjacent or not. More precisely, an electro-acoustic transducer 14 of a first streamer sends several first acoustic sequences and also receives several second acoustic sequences coming from a second electro-acoustic transducer 14 of a second streamer, adjacent or not relative to said first streamer. To estimate an inter-node distance, the data received by a transducer 14 of an acoustic node are then processed locally by a electronic module (not shown on figure 1) associated with the transducer 14 or processed by a master controller onboard the vessel.

Transducers 14 are transceivers of acoustic sequences (i.e. acoustic signals in the form of modulated bits) used to determine distances between adjacent nodes situated on the various streamers, thereby forming a mesh of inter-node distances, in order to know precise lateral positioning of all the streamers.

Transducer here is understood to mean either a single electroacoustic device consisting of a transceiver (emitter/receiver) of acoustic signals, or a combination of a sender device (e.g. pinger) and a receiver device (e.g a pressure particle sensor (hydrophone) or a motion particle sensor (accelerometer, geophone...)).

Usually, each node comprises an electro-acoustic transducer enabling it to behave alternately as a sender node and as a receiver node (for the transmission and the reception, respectively, of acoustic signals). In an alternative embodiment, a first set of nodes act only as sender nodes and a second set of nodes act only as receiver nodes. A third set of nodes (each acting as a sender node and a receiver node) can also be used in combination with the first and second sets of nodes.

For the immersion depth control, each bird 10 is equipped with one (or more) pressure sensor 15 as well as an associated electronic module (not shown) which enable to implement a feedback loop in order to measure the variations in depth and bring the streamers to a predetermined depth.

However, measuring seismic streamer immersion with such pressure sensors can cause problems in consideration of their fragility in marine environment. As a matter of fact, the pressure sensors are subject to various phenomena that affect their precision and even their working, such as:

- occurring of crevice, galvanic or electrolytic corrosion that may cause erroneous pressure measurements (and so an erroneous immersion driving) and/or infiltration of sea water inside the bird because of deterioration of the thin sensitive diaphragm which is no longer waterproof;
- occurring of marine growth on their sensitive diaphragm that may cause decrease of reaction time and so modify driving characteristics of the bird;
- change of measurement accuracy into the time due to variation in temperature that requires a permanent renewal of the calibration step.

It would therefore seem to be particularly worthwhile to make measurement of immersion distances of acoustic nodes without necessarily having recourse to pressure sensors.

It should be reminded that the aforesaid problem is described in the particular field of seismic prospecting in a marine environment, but it can be applied in other fields of application.

## 3. GOALS OF THE INVENTION

The invention, in at least one embodiment, is aimed especially at overcoming this drawback of the prior art.

More specifically, it is a goal of at least one embodiment of the invention to provide a technique for obtaining a node-to-surface distance between a reference surface and an acoustic node (like an immersion distance (or depth) for instance) in a network of acoustic nodes, that overcomes the undesirable effects related to the use of pressure sensors.

At least one embodiment of the invention is also aimed at providing a technique of this kind that does not necessitate the use of pressure sensors.

It is an additional goal of at least one embodiment of the invention to provide a technique of this kind that is simple to implement and with low manufacturing costs.

A goal of at least one particular embodiment is to envisage a reduction in investment associated with the means contributing to the control of positions of the streamers.

It is another goal of at least one embodiment of the invention to provide a technique that enables to carry out a quality control on the node-to-surface distance measurements associated with pressure sensors. The present invention aims therefore to increase reliability of node-to-surface distance measurements, in particular, to improve immersion depth control of streamers.

## 4. SUMMARY OF THE INVENTION

A particular embodiment of the invention proposes a method of obtaining a first node-to-surface distance between a reference surface and a first node belonging to a network comprising a plurality of nodes arranged along towed acoustic linear antennas and in which a plurality of acoustic sequences are transmitted between the nodes, each transmitted acoustic sequence being used to estimate at least one inter-node distance as a function of a propagation duration between a sender node and at least one receiver node of said acoustic sequence. The method comprises:

- a step of said first node emitting a given acoustic signal at an emission instant;
- at least one of the following steps:

  * said first node measures a first propagation duration elapsed between said emission instant and a reception instant of a first echo, resulting from a first reflection of said given acoustic signal by the reference surface;
  * at least one second node measures a second propagation duration elapsed between said emission instant and a reception instant of a second echo resulting from a second reflection of said given acoustic signal by the reference surface;

- at least one of the following steps:

  * obtaining a first value of the first node-to-surface distance, as a function of said first propagation duration;
  * obtaining at least one second value of the first node-to-surface distance, each as a function of said second propagation duration.

The general principle of this particular embodiment of the invention is therefore to transmit a given acoustic signal whose at least one echo (resulting from a reflection by a reference surface) is recuperated so as to obtain at least one value of the first node-to-surface distance (between the reference surface and the first node). The values of the first node-to-surface distance are obtained on the basis of propagation duration measurements of the signal echoes carried out by the first node and/or by other (second) nodes of the network. Thus, this particular embodiment relies on a wholly novel and inventive approach taking advantage of the fact that at least one value of the first node-to-surface distance is obtained without having recourse to dedicated devices (such as pressure sensors in case of estimation of a depth for example).

Advantageously, said nodes comprise transducers used for transmitting the acoustic sequences, and said steps of measuring the first and second propagation durations are implemented with said transducers.

Thus, by re-using the electro-acoustic transducers usually dedicated to estimate inter-node distances (i.e. distances of a different nature from the first node-to-surface distance), this particular embodiment enables to reduce costs regarding the means contributing to the control of acoustic linear antennas in immersion. In other words, with such a method, the use of transducers is therefore optimized since they can be used for both determining inter-node distances and node-to-surface distances.

Advantageously, said nodes are integrated into the towed acoustic linear antennas.

Compared to another solution consisting in connecting nodes to streamers as external satellite devices (each node being attached to a streamer, by a cable for example), the present solution (nodes integrated in the streamers) has several advantages: transport is facilitated, the whole (streamers and nodes) is more compact, less expensive to manufacture and assemble, the nodes are better protected (satellite devices may be subjected to impact with streamers).

Advantageously, said at least one second node further measures a third propagation duration elapsed between said emission instant and a reception instant of the given acoustic signal without reflection of said given acoustic signal by the reference surface. Said at least one second value of the first node-to-surface distance is obtained also as a function of said third propagation duration.

Thus, each second value of the first node-to-surface distance is more accurate.

Advantageously, said nodes comprise transducers used for transmitting the acoustic sequences, and said step of measuring the third propagation duration is implemented with said transducers.

Thus the costs are further reduced and the use of the transducers is further optimized.

Advantageously, the method further comprises a step of obtaining a value of a second node-to-surface distance between the reference surface and said at least one second node. Said second value of the first node-to-surface distance is function of:

  * said value of the second node-to-surface distance ;
  * said second and third propagation durations; and
  * a value of acoustic sound velocity.

Thus, besides the first value of the first node-to-surface distance, it is possible to obtain one or several further (second) values of the first node-to-surface distance in a simple way (only four parameters: second node-to-surface distance, second and third propagation durations, and acoustic sound velocity), thereby offering the facility of increasing accuracy of the obtained distance values.

Furthermore, in cases where no first value can be obtained, the method still allows to provide a (second) value of the first node-to-surface distance, even if the first node can not carry out a propagation duration measurement of the first echo.

The value of the acoustic sound velocity is for example provided by the node managing system or by one or several velocimeter (e.g. two velocimeters positioned on the two outmost streamers of the set of streamers towed by the vessel, one of the velocimeter being positioned near the vessel and the other at the opposite of the vessel).

By way of examples, the value of the second node-to-surface distance can be obtained by means of:

- a pressure measurement performed by a pressure sensor comprised in the second node; and/or
- a predetermined set value defined for instance by a user at the node managing system; and/or
- a first propagation duration and/or a second propagation duration obtained by implementation of the method according to the present invention for the second node.

Advantageously, in said step of obtaining at least one second value of the first node-to-surface distance, at least two second values of the first node-to-surface distance are obtained. The method comprises a step of implementing a weighted average of the first absolute values of the first node-to-surface distance, as a function of a second echo quality criteria.

The resultant value of the first node-to-surface distance is therefore more accurate.

Advantageously, the method further comprises a step of obtaining a third value of the first node-to-surface distance resulting from a pressure measurement, and a step of analyzing a quality level by comparing said third value of the first node-to-surface distance with said first or second value of the first node-to-surface distance.

It is thus possible to carry out a quality control on the node-to-surface distance measurements obtained with pressure sensors (the first or second value of the first node-to-surface distance, obtained with the invention, is used to control the quality of the third value of the first node-to-surface distance, obtained with a pressure sensor). In an alternative embodiment, it is also possible to carry out a quality control on the node-to-surface distance measurements obtained with the invention (the third value of the first node-to-surface distance, obtained with a pressure sensor, is used to control the quality of the first or second value of the first node-to-surface distance, obtained with the invention).

This allows therefore to increase reliability of node-to-surface distance measurements, in particular, to improve immersion depth control of acoustic linear antennas.

Advantageously, the method comprises a step of filtering of the first and second echoes received respectively by the first and second nodes by applying a timing window in order to keep only the echoes reflected by said reference surface.

Thus, the solution can be implemented even if the given acoustic signal is reflected by one or several surfaces other than the reference surface. For example, the given acoustic signal is reflected by a sea surface, as reference surface, and by an ocean bottom, as an other surface.

Advantageously, said reference surface belongs to the group comprising a sea surface and an ocean bottom.

Advantageously, said given acoustic signal is one of said acoustic sequences or an acoustic impulsive signal which precedes or follows one of said acoustic sequences in a predetermined transmission time period which is allocated to the first node. Said given acoustic signal is followed by a listening time slot.

In that way, the transmission time period usually used for transmission of an acoustic sequence is used for transmission of the given acoustic signal required for method implementation.

Advantageously, said step of obtaining said first value of the first node-to-surface distance is implemented by a device belonging to the group comprising said first node and a managing system of the network nodes, and said step of obtaining said at least second value of the first node-to-surface distance is implemented by a device belonging to the group comprising said at least one second node and a managing system of the network nodes.

Thus, the first and second values of the first node-to-surface distance can be estimated either locally in each node or at a manager system level which is deported from the acoustic linear antennas.

Another embodiment of the invention pertains to a computer program product comprising program code instructions for implementing the above-mentioned method (in any one of its different embodiments) when said program is executed on a computer.

Another embodiment of the invention pertains to a computer-readable storage means storing a computer program comprising a set of instructions executable by a computer to implement the above-mentioned method (in any one of its different embodiments).

In another embodiment of the invention, there is proposed a device for obtaining a node-to-surface distance between a reference surface and a first node belonging to a network comprising a plurality of nodes arranged along towed acoustic linear antennas and in which a plurality of acoustic sequences are transmitted between the nodes, each transmitted acoustic sequence being used to estimate at least one inter-node distance as a function of a propagation duration between a sender node and at least one receiver node of said acoustic sequence. Said device comprises:

- at least one of the following means:

  * a first mean for obtaining, from said first node, a first propagation duration elapsed between an emission instant of a given acoustic signal sent by a first node and a reception instant of a first echo, resulting from a first reflection of said given acoustic signal by the reference surface;
  * a second mean for obtaining, from at least one second node, a second propagation duration elapsed between said emission instant and a reception instant of a second echo resulting from a second reflection of said given acoustic signal by the reference surface;

- at least one of the following means:

  * a third mean for obtaining a first value of the node-to-surface distance, as a function of said first propagation duration;
  * a fourth mean for obtaining at least one second value of the node-to-surface distance, each as a function of said second propagation duration.

In another embodiment of the invention, there is proposed a first node belonging to a network comprising a plurality of nodes arranged along towed acoustic linear antennas and in which a plurality of acoustic sequences are transmitted between the nodes, each transmitted acoustic sequence being used to estimate at least one inter-node distance as a function of a propagation duration between a sender node and at least one receiver node of said acoustic sequence. Said first node comprises:

- means for emitting a given acoustic signal at an emission instant;
- means for measuring a propagation duration elapsed between said emission instant and an instant of reception, by said first node, of an echo, resulting from a reflection of said given acoustic signal by a reference surface;
- means for obtaining a value of a node-to-surface distance between said reference surface and said first node, as a function of said propagation duration.

In another embodiment of the invention, there is proposed a second node for obtaining a node-to-surface distance between a reference surface and a first node belonging to a network comprising a plurality of nodes arranged along towed acoustic linear antennas and in which a plurality of acoustic sequences are transmitted between the nodes, each transmitted acoustic sequence being used to estimate at least one inter-node distance as a function of a propagation duration between a sender node and at least one receiver node of said acoustic sequence. Said second node comprises:

- means for measuring a first propagation duration elapsed between an emission instant of a given acoustic signal sent by said first node and an instant of reception, by said second node, of an echo, resulting from a reflection of said given acoustic signal by a reference surface;
- means for measuring a second propagation duration elapsed between said emission instant and an instant of reception, by said second node, of the given acoustic signal without reflection of said given acoustic signal by the reference surface;
- means for obtaining a value of a node-to-surface distance between said reference surface and said first node, a function of said first and second propagation durations.

## 5. LIST OF FIGURES

Other features and advantages of embodiments of the invention shall appear from the following description, given by way of an indicative and non-exhaustive example, and from the appended drawings, of which:

- Figure 1 already described with reference to the prior art, presents an example of the structure of an acoustic node arranged along a streamer;
- Figure 2 represents a timing diagram of an acoustic signal transmitted by an acoustic node according to a particular embodiment of the invention;
- Figure 3 illustrates a communications scheme in which there is implemented a method for determining the immersion distance of an acoustic node according to a particular embodiment of the invention;
- Figure 4 represents a timing diagram of acoustic signals received by an acoustic node, via a direct transmission path and an indirect transmission path, according to a particular embodiment of the invention;
- Figure 5 is a mathematic representation illustrating calculation of the immersion distance of an acoustic node in the context of the particular embodiment of figure 3;
- Figure 6 illustrates an example of a network of acoustic nodes in which it is possible to implement the method for obtaining immersion distances according to a particular embodiment compliant with the invention.

## 6. DETAILED DESCRIPTION

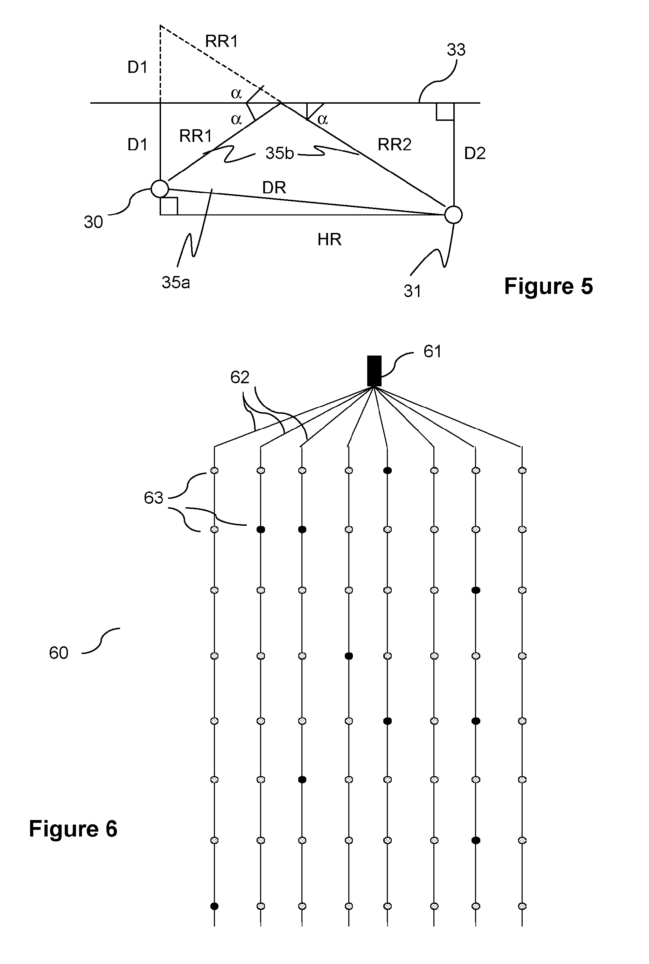

In all the figures of the present document, the identical elements and steps are designated by a same numerical reference.
**Figure 1** already described with reference to the prior art, illustrates a schematic example of an acoustic node (transducer 14 and its associated electronic) associated with a bird 10 arranged along a streamer 13.
It should be noted that, in a network of acoustic nodes, as the one shown in figure 6 by way of example, all the nodes are not necessarily equipped with motorized pivoting wings 12 for driving the streamers. Indeed, some acoustic nodes of the network may only comprise an electro-acoustic transducer 14 with its associated electronic module (not shown) to process the acoustic data coming from other nodes placed on different streamers. The transducer is here part of the streamer. It may also be deported from the streamer (not shown on the figure).
**Figure 2** represents a timing diagram of an acoustic signal 20 transmitted by an acoustic node according to a particular embodiment of the invention.
This acoustic signal 20 comprises:

- a sequence of modulated bits 21, of acoustic nature, consisted of data of every kind, and called acoustic sequence later on the description;
- an acoustic impulsive signal 22, such as an acoustic ping, a chirp or any signal with short duration, followed by a listening time slot 23 (also called listening time window).

In an alternative embodiment, the sequence of modulated bits 21 and the acoustic impulsive signal 22 are one and a same signal.
The acoustic sequence 21 is usually used to estimate an inter-node distance between an sender node and at least one receiver node placed on adjacent streamers, in order to position the network of streamers and control their position if necessary. To estimate the inter-node distance, the node receiving the acoustic sequence 21 measures the propagation duration elapsed between the instants of emission and reception of the acoustic sequence 21, from the dating of the acoustic sequence 21 with respect to a common reference (the set of nodes of the network are synchronized and know the speech time of each sender node). The inter-node distance between the sending and receiver nodes is then estimated according to the following equation:

$$d_{AB} = k.t_{AB}$$

with:

d$_{AB}$, the distance separating the sender node A from the receiver node B;

t$_{AB}$, the propagation duration elapsed between the instants of emission (node A) and reception (node B) of the acoustic sequence;

k, the predefined value of acoustic sound velocity in the prospecting environment.

The acoustic signal 20 also comprises a signal dedicated to the determination of the immersion distance between a node and the sea surface. This signal is consisted of an acoustic impulsive signal 22 followed by a listening time slot 23.

In a particular embodiment described below with further details, this signal could also be used for determining a node-to-surface distance between a node and the surface of the ocean bottom.

It should be noted that the signal comprising the acoustic impulsive signal 22 followed by the listening time slot 23 can be preceded by an acoustic sequence 21 as shown in figure 2 or, on the contrary, can be followed by an acoustic sequence 21.

It is further noted that it could be envisaged a particular embodiment where no acoustic sequence 21 is sent by the sender node of the acoustic signal 20, but only the signal 22 dedicated to the determination of the node-to surface distance (acoustic impulsive signal 22 followed by the listening time slot 23 on figure 2).

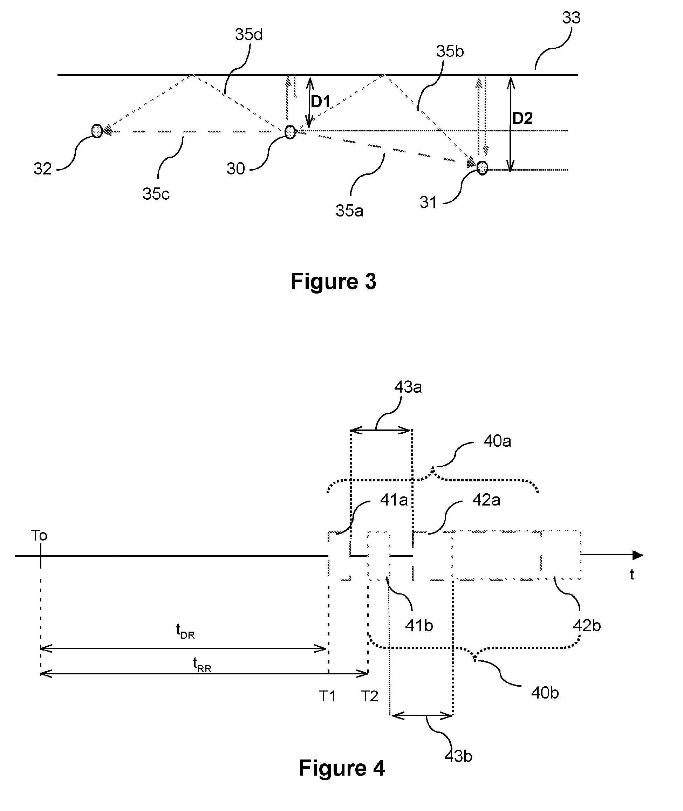

The listening time slot 23 is intended for enabling a receiver node of the acoustic signal 20 to listen and detect an echo resulting from a reflection by the sea surface of the impulsive signal 22. The details about the principle of determination of the immersion distance (or depth more precisely) between a node and the sea surface are explained below in relation with figures 3 to 6.

In a context of a network of acoustic nodes, each node is able of behaving alternately as a sender node and as a receiver node and having only one electro-acoustic transducer for the transmission and reception of acoustic signals.

Another configuration could also be envisaged with a sender node which performs only sending function (like a pinger) and a receiver node which performs only receiving function (like an hydrophone used on the streamer), according to a particular embodiment. The distance between the pinger and the hydrophone needs however to be known.

The acoustic network relies on time, frequency and space access mode (i.e. time, frequency and spatial discrimination).

The principle of the time discrimination is that of sub-dividing the available time into several time slots or speech times which are allocated to the different nodes of the network: each node of the network has cyclically a speech time during which it transmits its acoustic sequence.

Thus, according to the invention, when a node transmits an acoustic signal 20 during its speech times 24, all the other nodes can listen to it. Also, when a node does not indent to transmit an acoustic sequence 21, the both acoustic impulsive signal 22 and listening time slot 23 must be sent during the speech time allocated to the sender node.

The principle of the frequency discrimination is that of using multiple frequency bands for the emission of acoustic signals, each frequency band being allocated to determined nodes of the network.

We call spatial discrimination the fact that two distant nodes can emit in the same time slot and in the same frequency bandwidth if the two acoustic sequences arrive at different instants on the receiver nodes. Therefore there isn't any interference between the acoustic sequences and each receiver node is able to process independently.

**Figure 3** illustrates a communications scheme in which a method is implemented to determine the immersion distance (or depth) of an acoustic node according to a particular embodiment of the invention.

This figure considers an acoustic network where the depth of the acoustic node 30 is sought to be determined.

Depth of a given node is the distance separating the given node from the sea surface 33.

The network of the figure 3 here comprises two adjacent nodes 31, 32 placed on both sides of the node 30. For example, the three nodes 30, 31 and 32 are immersed in water around ten meters below the sea level 33.

In a first step, the node 30 sends omnidirectionaly an acoustic signal 20, for example during the speech time and on the frequency band reserved for that purpose.

If the sender node 30 detects an echo of the acoustic signal that is has sent, this echo resulting from a reflection of this acoustic signal by the sea surface 33 (the water-air interface indeed acts as a reflective surface for acoustic waves), the sender node 30 is able of measuring the propagation duration elapsed between the emission instant of the acoustic signal and the reception instant of the echo of that acoustic signal. More precisely, the propagation duration measured by the sender node 30 is the duration elapsed between the emission instant of the acoustic impulsive signal 22 and the reception instant of the echo of the acoustic impulsive signal, from the dating of the acoustic impulsive signal with respect to a common reference.

In a first case (local computation), the sender node 30 deduces itself its own depth as a function of the measured propagation duration and a predefined value of acoustic sound velocity (k) in the marine environment in which the node navigates.

It should be noted that acoustic immersion measurement is relatively insensitive to an error of sound velocity measurement in the context of typical streamer immersions (i.e. at depth ranging around 10 meters). Indeed, a precision on the sound velocity of 1m/s implicates an error on the depth measurement less than 1 centimeter.

In a second case (deported computation), the sender node 30 transmits, through the wire communication bus integrated to the streamer, the propagation duration previously measured to the node manager system, which takes care of the calculation of the depth of the sender node 30.

This first measurement of depth is called hereafter as two-way immersion measurement: it is characterized by a propagation duration measurement of a return-way between the sender node and a reflective surface, carried out by the sender node.

It is noted that the omnidirectional radiation pattern of the electro-acoustic transducer used by the nodes does not lead to use this kind of transducer for implementing the two-way immersion measurement, which rather needs a directional radiation pattern.

In the event that the two-way immersion measurement does not allow obtaining a first measurement of depth, another immersion measurement (for which the principle is described below) is implemented to overcome this deficiency.

For example, in the event of small depths, the propagation duration between the emission instant of the acoustic impulsive signal and the reception instant of the echo of the acoustic impulsive signal is so short that the measurement of propagation duration by the sole sender node, is not always possible because of well-known phenomena related to transducer ringing. Also, the propagation duration may be not measurable if bubble clouds (due to vessel wake for example) is located between the sea surface and the node.

In these two last cases, the sender node 30 detects no surface echo, but the depth of the acoustic node 30 can be determined by another node of the network, like the adjacent acoustic node 31 or 32, if this another node has received the acoustic impulsive signal 22 (reflected or not, as described in more details hereafter) sent by the sender node 30.

The node 31, acting as a receiver node, detects the acoustic signal 20, and hence the acoustic impulsive signal 22, sent by the sender node 30. The receiver node 31 then measures a first propagation duration elapsed between the emission and reception instants of the acoustic impulsive signal 22, this acoustic impulsive signal 22 being received via a direct transmission path (represented by the dotted line 35a). This signal is referred to as "a direct ping". More precisely, and as shown in **figure 4**, the propagation duration measured by the receiver node 31 is the duration ($t_{DR}$) that is elapsed between the emission instant ($T_0$) of the acoustic impulsive signal 22 and the reception instant ($T_1$) of the acoustic impulsive signal 22.

Then, the receiver node 31 detects an echo of the acoustic signal 20, and hence the acoustic impulsive signal 22, sent by the sender node 30, this echo resulting from the reflection by the sea surface 33 of the acoustic signal 20. As shown in figure 4, the receiver node 31 then measures a second propagation duration ($t_{RR}$) elapsed between the emission instant ($T_0$) of the acoustic impulsive signal 22 and the reception instant ($T_2$) of the echo of the acoustic impulsive signal 22. This echo corresponds here to the acoustic impulsive signal received from the sender node 30 via an indirect transmission path (represented by the dotted line 35b). This signal is referred to as "a reflected ping".

In a first case, from the first and second propagation durations ($t_{DR}$, $t_{RR}$) previously measured by the node receiver node 31, this latter is able of determining itself the depth of the sender node 30, in accordance with the conditions mentioned below in relation with figure 5.

In a second case, the node receiver node 31 transmits the values of the first and second propagation durations previously measured to the node manager system, which takes care of the determination of the depth of the sender node 30, in accordance with the conditions mentioned below in relation with figure 5.

The reasoning developed above regarding the receiver node 31 can be transposed to the receiver node 32 and the direct and indirect transmission paths 35c and 35d.

This second measurement of depth is called hereafter as one-way immersion measurement: it is characterized by measurement, carried out by a neighbor node (31 or 32) of said sender node 30, of a propagation duration of a reflective signal and a propagation duration of a direct signal.

It should be noted that the number of acoustic nodes shown in figure 3 is deliberately limited by way of a purely pedagogical description, so as not to burden the figure and the associated description. It is clear however that the invention can be implemented in the context of an application with a greater number of nodes (notably in order to make the measurements of depth more accurate), as shown in figure 6. Furthermore, the description of figure 3 considers an embodiment with only adjacent nodes to the sender node. It is clear however that the invention can be implemented in the context of an application with nodes which are not necessary adjacent to the sender node.

Figure 4, already partially described with reference to figure 3, represents a timing diagram of acoustic signals received by an acoustic node (31 or 32), via a direct transmission path and an indirect transmission path, according to a particular embodiment of the invention.

The acoustic signal 40a corresponds to the acoustic signal sent by the sender node 30 and received directly by the receiver node (31 or 32) without any reflection of the signal on the sea surface 33. It comprises an acoustic impulsive signal 41a followed by a listen time slot 43a and an acoustic sequence 42a.

The acoustic signal 40b corresponds to the acoustic signal sent by the sender node 30 and received indirectly by the receiver node (31 or 32) via an indirect transmission path. In other words, the signal 40b represents the echo resulting from the reflection by the sea surface - or more generally by a reference surface - of the acoustic signal. It comprises an echo of the acoustic impulsive signal 41b followed by a listen time slot 43b and an echo of the acoustic sequence 42b.

The listen time slot 43a enables the receiver node of the signals 40a and 40b to detect the echo 41b of the acoustic impulsive signal 22 sent by the sender node.

It should be noted that when two acoustic signals are received by the receiver node, a discrimination between direct path and indirect path shall be carried out. It may be considered that:

- the first signal received by this node corresponds to the signal transmitted via the direct transmission path and the second signal, to the signal transmitted via the indirect transmission path; or
- the more energetic signal corresponds to the signal which went over the direct path and direct and the least energetic signal, to the signal which went over an indirect path (due to energy losses resulting from the signal reflection by the sea surface or sea bottom).

**Figure 5** is a mathematic representation illustrating a method for calculating an depth of an acoustic node in the context of the particular embodiment of figure 3.

The identical elements between figures 3 and 5 are designated by a same numerical reference. As figure 3, the depth to be determined (designed by the reference D1) corresponds to the distance separating the sender node 30 from the sea surface33.

It is reminded that the sender node 30 is here considered as being immerged at a small depth. This sender node 30 is thus unable to determine its own depth D1 via a two-way immersion measurement. In such case, it is the receiver node 31 (or node 32) which shall take care of computing the depth D1 for the sender node 30 on the basis of the following formula:

$$D1 = \frac{(t_{RR}^{2} - t_{DR}^{2})}{4D2}k^2 \quad (I)$$

with:

D1, the depth, between the sender node 30 and the sea surface 33, calculated by the receiver node 31;
D2, the depth between the node 31 1 and the sea surface 33, known by the node 31;
$t_{DR}$, the propagation duration of a direct acoustic impulsive signal measured by the node 31 (i.e. the propagation duration between the instants of emission and reception of the acoustic impulsive signal);
$t_{RR}$, the propagation duration of a reflected acoustic impulsive signal measured by the node 31 (i.e. the propagation duration between the emission instant of the acoustic impulsive signal and the reception instant of the echo of the acoustic impulsive signal);
k, a predefined value of the acoustic sound velocity.

As a matter of fact, in accordance with the Pythagorean theorem, we can write the following formulas: $HR^2 = DR^2 - (D1-D2)^2$ and $HR^2 = RR^2 - (D1+D2)^2$, with RR = RR1 + RR2

From these two formulas, we can write $HR^2 = DR^2 - (D1-D2)^2 = RR^2 - (D1+D2)^2$ which, after simplifying, leads to the formula

$$D1 = \frac{RR^2 - DR^2}{4D2} = \frac{(t_{RR}^{2} - t_{DR}^{2})}{4D2}k^2 .$$

This formula shows that if the sender node 30 is not able of carrying out a measurement of its own depth D1, it is therefore sufficient that there is at least one node (as is the case with the receiver node 31 in this case) for which the depth D2, as well as the propagation duration of the direct acoustic impulsive signal ($t_{DR}$) and the propagation duration of the reflected acoustic impulsive signal ($t_{RR}$) are known, to deduce the depth D1.

A value of the depth D2 can be obtained, e.g. by means of:

- a set value defined by a user at the node managing system;
- a pressure measurement performed by a pressure sensor of the node 31;
- propagation duration measurement obtained after implementing the one-way immersion measurement or two-way immersion measurement (or the both measurements) according to the method of the invention for the node 31 beforehand.

Whether the receiver node 31 has no knowledge of the depth D2, this one still determines a relative value of the depth D1 relative to the sender node 30. Thus, thanks to the aforesaid formula (I), knowing the depth of a unique node in the network is sufficient to deduce the depth, from neighbor to neighbor, of all the remaining nodes of the network. Take for instance the situation of figure 3 in which the depth D2 is not known and a relative value of D1 is obtained. Taking account couple of the nodes 31, 32 whose the depth of the node 32, noted D3, is known, the absolute value of D2 can be determined with the formula (I). Then, taking account couple of the nodes 30, 31, the absolute value of D1 can be deduced with the formula (I) as a function of the value of D2 determined with the node 32.

In other words, even if the sender node 30 does not detect any surface echo from its own sent signal, the depth D1 of this node can be still deduced by one other node or several other nodes of the network.

One may envisage an embodiment in variant wherein the sender node 30 is able to determine its own depth (two-way immersion measurement) and at least another node is also implicated for determining a value of depth of the sender node (one-way immersion measurement).

In that way, the node manager system may have at its disposal a plurality of values of depth (which can be relative or absolute values), giving it the possibility to carry out a mathematic process in order to strengthen the measurements of depth.

Therefore, the greater the number of nodes implicated in the determination process of a depth of a node is, the more accurate the value of the depth is. Indeed, having centralized a plurality of values of depth, the manager system can carry out, e.g., an average calculation of those values, thereby decreasing the standard deviation on the measurement of depth. The reliability of measurements of depths is thus improved. One can also envisage the possibility of, in a particular embodiment, implementing a weighted average of the depth values obtained for a given node, as a function of a quality criterion of the received signal echo. The greater the signal echo quality is, the greater the weight applied to the corresponding depth value is.

According to a particular embodiment of the invention, one may envisage to carry out a quality control on the depth values resulting from measurements with the pressure sensors of the network. Indeed, in case one, several or all nodes of the network are equipped with a pressure sensor, the depth value from the pressure sensor can be compared with the depth value (or the averaged depth values, if any) obtained from the implementation of the acoustic immersion measurement method according to the invention (providing two-way immersion measurements and/or one-way immersion measurements), so as to validate or invalidate said pressure sensor depth value. Two remote values can be synonymous with a defective pressure sensor for example. This enables to increase reliability of immersion measurements.

**Figure 6** illustrates an example of a network 60 of acoustic nodes 63 in which it is possible to implement the method for obtaining depths according to a particular embodiment compliant with the invention.

The acoustic nodes 63 are arranged along a plurality of streamers 62 towed by a boat 61 on which a node manager system and a navigation system are embedded. The nodes represented on the figure by a point with black color are the nodes of the network that are able of carrying out a two-way immersion measurement, the remaining nodes being unable to take similar action.

When several nodes of the network can carry out of a two-way immersion measurement, the equation system managed by the manager system is oversized (there a more equations than unknowns), the uncertainties concerning the immersion measurements are significantly decreased.

For example, a node for which the depth is sought, having six nodes whose four nodes are able of carrying out a two-way immersion measurement, shall obtain a value of depth with a standard deviation divided per two.

For the purpose of simplifying the description of the present invention, the above description considers only an echo resulting from the reflection by the sea surface of the acoustic impulsive signal. It is clear however that the invention can be implemented in the context of an application with an echo resulting from the reflection by the ocean bottom of the acoustic ping. Indeed, an electro-acoustic transducer sending, by definition, with an omnidirectional directivity, it is possible to detect similarly the surface and the bottom of the ocean. This is particularly interesting notably at a shallow depth (also called shallow water configuration) and in particular at the head of streamers in order to avoid a possible deterioration of the streamers on the floor. In order to differentiate a signal echo resulting from a reflection by the sea surface from a signal echo resulting from a reflection by the ocean bottom, it can be envisaged to carry out a timing window function by signal processing. In that way, in order to detect an echo from the ocean bottom, an observation window shall be defined so as to exclude the theoretical reception instant of the echo from the sea surface which depends on the average depth of the streamers.

## Claims

1. Method of obtaining a first node-to-surface distance (D1) between a reference surface (33) and a first node (30) belonging to a network comprising a plurality of nodes arranged along towed acoustic linear antennas and in which a plurality of acoustic sequences (21) are transmitted between the nodes, each transmitted acoustic sequence being used to estimate at least one inter-node distance as a function of a propagation duration between a sender node and at least one receiver node of said acoustic sequence, **characterized in that** the method comprises:

    - a step of said first node (30) emitting a given acoustic signal at an emission instant ($T_0$);
    - at least one of the following steps:

        * said first node measures a first propagation duration elapsed between said emission instant and a reception instant of a first echo, resulting from a first reflection of said given acoustic signal by the reference surface;
        * at least one second node (31, 32) measures a second propagation duration ($t_{RR}$)

elapsed between said emission instant and a reception instant (T2) of a second echo resulting from a second reflection of said given acoustic signal by the reference surface;

- at least one of the following steps:

∗ obtaining a first value of the first node-to-surface distance, as a function of said first propagation duration;
∗ obtaining at least one second value of the first node-to-surface distance, each as a function of said second propagation duration.

**2.** Method according to claim 1, **characterized in that** said nodes comprise transducers used for transmitting the acoustic sequences, and **in that** said steps of measuring the first and second propagation durations are implemented with said transducers.

**3.** Method according to claim 1 or 2, **characterized in that** said nodes are integrated into the towed acoustic linear antennas.

**4.** Method according to any one of claims 1 to 3, **characterized in that** said at least one second node further measures a third propagation duration ($t_{DR}$) elapsed between said emission instant ($T_o$) and a reception instant (T1) of the given acoustic signal without reflection of said given acoustic signal by the reference surface, and **in that** said at least one second value of the first node-to-surface distance is obtained also as a function of said third propagation duration.

**5.** Method according to claim 4, **characterized in that** said nodes comprise transducers used for transmitting the acoustic sequences, and **in that** said step of measuring the third propagation duration is implemented with said transducers.

**6.** Method according to claim 4 or 5, **characterized in that** it further comprises a step of obtaining a value of a second node-to-surface distance (D2) between the reference surface and said at least one second node, and **in that** said second value of the first node-to-surface distance (D1) is function of:

∗ said value (D2) of the second node-to-surface distance ;
∗ said second and third propagation durations; and
∗ a value of acoustic sound velocity.

**7.** Method according to claim 6, **characterized in that**, in said step of obtaining at least one second value of the first node-to-surface distance (D1), at least two second values of the first node-to-surface distance (D1) are obtained, and **in that** it comprises a step of implementing a weighted average of the first absolute values of the first node-to-surface distance (D1), as a function of a second echo quality criteria.

**8.** Method according to any one of claims 6 and 7, **characterized in that** it further comprises a step of obtaining a third value of the first node-to-surface distance (D1) resulting from a pressure measurement, and **in that** it comprises a step of analyzing a quality level by comparing said third value of the first node-to-surface distance with said first or second value of the first node-to-surface distance (D1).

**9.** Method according to any one of claims 1 to 8, **characterized in that** it comprises a step of filtering of the first and second echoes received respectively by the first and second nodes by applying a timing window in order to keep only the echoes reflected by said reference surface.

**10.** Method according to any one of claims 1 to 9, **characterized in that** said reference surface belongs to the group comprising a sea surface and an ocean bottom.

**11.** Method according to any one of claims 1 to 10, **characterized in that** said given acoustic signal is one of said acoustic sequences (21) or an acoustic impulsive signal (22) which precedes or follows one of said acoustic sequences (21) in a predetermined transmission time period which is allocated to the first node, and **in that** said given acoustic signal is followed by a listening time slot (23).

**12.** Method according to any one of claims 1 to 11, **characterized in that** said step of obtaining said first value of the first node-to-surface distance is implemented by a device belonging to the group comprising said first node and a managing system of the network nodes, and **in that** said step of obtaining said at least second value of the first node-to-surface distance is implemented by a device belonging to the group comprising said at least one second node and a managing system of the network nodes.

**13.** Computer program product **characterized in that** it comprises program code instructions for implementing the method according to at least one of the claims 1 to 12, when said program is executed on a computer.

**14.** Computer-readable storage means storing a computer program comprising a set of instructions executable by a computer to implement the method according to at least one of the claims 1 to 12.

**15.** Device for obtaining a node-to-surface distance (D1) between a reference surface (33) and a first node (30) belonging to a network comprising a plurality of nodes arranged along towed acoustic linear antennas and in which a plurality of acoustic sequences (21) are transmitted between the nodes, each transmitted acoustic sequence being used to estimate at least one inter-node distance as a function of a propagation duration between a sender node and at least one receiver node of said acoustic sequence, **characterized in that** it comprises:

- at least one of the following means:

∗ a first mean for obtaining, from said first node, a first propagation duration elapsed between an emission instant of a given acoustic signal sent by a first node and a reception instant of a first echo, resulting from a first reflection of said given acoustic signal by the reference surface;
∗ a second mean for obtaining, from at least one second node, a second propagation duration elapsed between said emission instant and a reception instant of a second echo resulting from a second reflection of said given acoustic signal by the reference surface;

- at least one of the following means:

∗ a third mean for obtaining a first value of the node-to-surface distance, as a function of said first propagation duration;
∗ a fourth mean for obtaining at least one second value of the node-to-surface distance, each as a function of said second propagation duration.

**16.** First node (30) belonging to a network comprising a plurality of nodes arranged along towed acoustic linear antennas and in which a plurality of acoustic sequences (21) are transmitted between the nodes, each transmitted acoustic sequence being used to estimate at least one inter-node distance as a function of a propagation duration between a sender node and at least one receiver node of said acoustic sequence, **characterized in that** it comprises:

- means for emitting a given acoustic signal at an emission instant;
- means for measuring a propagation duration elapsed between said emission instant and an instant of reception, by said first node, of an echo, resulting from a reflection of said given acoustic signal by a reference surface;
- means for obtaining a value of a node-to-surface distance (D1) between said reference surface (33) and said first node, as a function of said propagation duration.

**17.** Second node for obtaining a node-to-surface distance (D1) between a reference surface (33) and a first node (30) belonging to a network comprising a plurality of nodes arranged along towed acoustic linear antennas and in which a plurality of acoustic sequences (21) are transmitted between the nodes, each transmitted acoustic sequence being used to estimate at least one inter-node distance as a function of a propagation duration between a sender node and at least one receiver node of said acoustic sequence, **characterized in that** it comprises:

- means for measuring a first propagation duration elapsed between an emission instant of a given acoustic signal sent by said first node and an instant of reception, by said second node, of an echo, resulting from a reflection of said given acoustic signal by a reference surface;
- means for measuring a second propagation duration elapsed between said emission instant and an instant of reception, by said second node, of the given acoustic signal without reflection of said given acoustic signal by the reference surface;
- means for obtaining a value of a node-to-surface distance (D1) between said reference surface (33) and said first node, a function of said first and second propagation durations.

**Amended claims in accordance with Rule 137(2) EPC.**

**1.** Method of obtaining a first node-to-surface distance (D1) between a reference surface (33) and a first node (30) belonging to a network comprising a plurality of nodes arranged along towed acoustic linear antennas and in which a plurality of acoustic sequences (21) are transmitted between the nodes, each transmitted acoustic sequence being used to estimate at least one inter-node distance as a function of a propagation duration between a sender node and at least one receiver node of said acoustic sequence, **characterized in that** the method comprises:

- emitting, by said first node (30), a given acoustic signal at an emission instant ($T_0$);
- measuring, by at least one second node (31, 32):

* a first propagation duration ($t_{RR}$) elapsed between said emission instant and a reception instant (T2) of an echo resulting from a reflection of said given acoustic signal by the reference surface;

* a second propagation duration ($t_{DR}$) elapsed between said emission instant ($T_o$) and a reception instant (T1) of the given acoustic signal without reflection of said given acoustic signal by the reference surface;

- obtaining at least one first value of the first node-to-surface distance, each as a function of said first ($t_{RR}$) and second ($t_{DR}$) propagation durations.

**2.** Method according to claim 1, **characterized in that** said nodes comprise transducers used for transmitting the acoustic sequences, and **in that** said steps of measuring the first and second propagation durations are implemented with said transducers.

**3.** Method according to claim 1 or 2, **characterized in that** said nodes are integrated into the towed acoustic linear antennas.

**4.** Method according to any one of claims 1 to 3, **characterized in that** it further comprises a step of obtaining a value of a second node-to-surface distance (D2) between the reference surface and said at least one second node,
and **in that** the first value of said first node-to-surface distance (D1) is function of:

* the value of said second node-to-surface distance (D2);
* said first ($t_{RR}$) and second ($t_{DR}$) propagation durations; and
* a value of acoustic sound velocity.

**5.** Method according to any one of claims 1 to 4, **characterized in that** it further comprises a step of implementing a weighted average of at least two first values of the first node-to-surface distance (D1) obtained in said step of obtaining, as a function of a echo quality criteria.

**6.** Method according to any one of claims 1 to 5, **characterized in that** it further comprises steps of:

- obtaining a second value of the first node-to-surface distance (D1) resulting from a pressure measurement; and
- analyzing a quality level by comparing said second value of the first node-to-surface distance (D1) with said at least one first value of the first node-to-surface distance (D1).

**7.** Method according to any one of claims 1 to 6, **characterized in that** it comprises a step of filtering of the echo received by the second node by applying a timing window in order to keep only the echo reflected by said reference surface.

**8.** Method according to any one of claims 1 to 7, **characterized in that** said reference surface belongs to the group comprising a sea surface and an ocean bottom.

**9.** Method according to any one of claims 1 to 8, **characterized in that** said given acoustic signal is one of said acoustic sequences (21) or an acoustic impulsive signal (22) which precedes or follows one of said acoustic sequences (21) in a predetermined transmission time period which is allocated to the first node,
and **in that** said given acoustic signal is followed by a listening time slot (23).

**10.** Method according to any one of claims 1 to 9, **characterized in that** said step of obtaining said at least one first value of the first node-to-surface distance is implemented by said at least one second node or by a managing system of the network nodes.

**11.** Computer program product **characterized in that** it comprises program code instructions for implementing the method according to at least one of the claims 1 to 10, when said program is executed on a computer.

**12.** Computer-readable storage means storing a computer program comprising a set of instructions executable by a computer to implement the method according to at least one of the claims 1 to 10.

**13.** Device for obtaining a node-to-surface distance (D1) between a reference surface (33) and a first node (30) belonging to a network comprising a plurality of nodes arranged along towed acoustic linear antennas and in which a plurality of acoustic sequences (21) are transmitted between the nodes, each transmitted acoustic sequence being used to estimate at least one inter-node distance as a function of a propagation duration between a sender node and at least one receiver node of said acoustic sequence, **characterized in that** it comprises:

- means for obtaining:

* a first propagation duration elapsed between an emission instant of a given acoustic signal and an instant of reception of an echo resulting from a reflection of said given acoustic signal by a reference surface;
* a second propagation duration elapsed between said emission instant and an instant of reception of the given acoustic signal without reflection of said given acoustic signal by the reference surface;

- means for obtaining at least one value of the node-to-surface distance (D1) as a function of said first and second propagation durations.

**Figure 1**

**Figure 2**

**Figure 3**

**Figure 4**

**Figure 5**

**Figure 6**

# EP 2 541 282 A1

**EUROPEAN SEARCH REPORT**

Application Number

EP 11 30 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/058022 A1 (KITCHIN DAVID A [US] ET AL) 17 March 2005 (2005-03-17) * paragraphs [0016], [0031], [0069], [0075], [0079]; figures 1,1a * | 1-17 | INV. G01V1/38 |
| A | US 2010/002538 A1 (FRIVIK SVEIN ARNE [NO] ET AL) 7 January 2010 (2010-01-07) * paragraphs [0033] - [0035], [0051], [0062] * | 1-17 | |
| A | US 2008/025146 A1 (WELKER KENNETH E [NO]) 31 January 2008 (2008-01-31) * paragraphs [0012], [0013], [0037], [0038] * | 1-17 | |
| A | US 2009/245019 A1 (FALKENBERG JON [NO] ET AL) 1 October 2009 (2009-10-01) * paragraphs [0043], [0044], [0071], [0072], [0074] * | 1-17 | |
| A | WO 2011/014071 A2 (KONGSBERG SEATEX AS [NO]; FJELLSTAD OLA ERIK [NO]; RINNAN ARNE [NO]) 3 February 2011 (2011-02-03) * page 13, line 26 - line 29 * * page 19, line 11 - page 20, line 3 * * page 23, line 8 - line 20 * * figure 2 * | 1-17 | TECHNICAL FIELDS SEARCHED (IPC) G01V |

The present search report has been drawn up for all claims

| Place of search | Date of completion of the search | Examiner |
|---|---|---|
| Munich | 25 November 2011 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

## ANNEX TO THE EUROPEAN SEARCH REPORT
## ON EUROPEAN PATENT APPLICATION NO.

EP 11 30 5834

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2011

| Patent document cited in search report | | | Publication date | Patent family member(s) | | | Publication date |
|---|---|---|---|---|---|---|---|
| US 2005058022 | A1 | | 17-03-2005 | NONE | | | |
| US 2010002538 | A1 | | 07-01-2010 | GB | 2473587 | A | 16-03-2011 |
| | | | | US | 2010002538 | A1 | 07-01-2010 |
| | | | | WO | 2010005829 | A2 | 14-01-2010 |
| US 2008025146 | A1 | | 31-01-2008 | EP | 2069825 | A2 | 17-06-2009 |
| | | | | US | 2008025146 | A1 | 31-01-2008 |
| | | | | WO | 2008060719 | A2 | 22-05-2008 |
| US 2009245019 | A1 | | 01-10-2009 | AU | 2009200675 | A1 | 15-10-2009 |
| | | | | BR | PI0900914 | A2 | 01-12-2009 |
| | | | | GB | 2458757 | A | 07-10-2009 |
| | | | | US | 2009245019 | A1 | 01-10-2009 |
| WO 2011014071 | A2 | | 03-02-2011 | NONE | | | |

EPO FORM P0459

For more details about this annex : see Official Journal of the European Patent Office, No. 12/82